# EUROPEAN PATENT APPLICATION

(11) **EP 4 564 139 A1**
(43) Date of publication of application: **04.06.2025**
(21) Application number: 24216283.2
(22) Date of filing: 28.11.2024
(51) Int. Cl.: G06F 3/01

(54) **PINCH STATE DETECTION SYSTEM AND METHODS**

(30) Priority: 29.11.2023 US 202318522516
(71) Applicant: Doublepoint Technologies Oy, 00150 Helsinki (FI)
(72) Inventor: HU, Jamin, 00150 Helsinki (FI); KLAR, Ville, 00150 Helsinki (FI); TUOMINEN, Lauri, 00150 Helsinki (FI)
(74) Representative: Laine IP Oy

(57) **Abstract**

According to an example aspect of the present invention, there is provided an input device and corresponding method which digitizes and transforms minute hand movements and gestures into user interface commands without interfering with the normal use of one's hands. The device and method may, for example, determine a gesture state by detecting and classifying gesture transitions based on transients within the sensor data of received data streams from a plurality of sensors, where the sensors are preferably of different types.

## Description

### FIELD

Various example embodiments of this disclosure relate to a wearable apparatus and a method, where the apparatus and method are usable for controlling devices, in particular in the field of computing and extended reality user interface applications. Extended reality, XR, includes augmented reality, AR, virtual reality, VR, and mixed reality, MR.

### BACKGROUND

Traditionally, digital devices have been controlled with a dedicated physical controller. For example, a computer can be operated with a keyboard and mouse, a game console with a handheld controller, and a smartphone via a touchscreen. Usually, these physical controllers comprise sensors and/or buttons for receiving inputs from the user based on the user's actions. Such discrete controllers are ubiquitous, but they impede human-machine-interaction by adding a redundant layer of technology between the user's hands and the computation device. Additionally, such dedicated devices are typically only suited for controlling a specific device. Also, such devices may, for example, impede the user, so that the user is unable to use his hand(s) for other purposes when using the control device.

### SUMMARY OF THE INVENTION

In view of the above-mentioned issues, improvements are needed in the field of XR user interfaces. A suitable input device, such as the invention disclosed herein, directly digitizes and transforms minute hand movements and gestures into machine commands without interfering with the normal use of one's hands. The embodiments of the present disclosure may, for example, detect user actions by determining gesture states, based on received sensor data streams from at least one sensor, preferably a plurality of sensors, where the sensors are preferably of different types.

The invention is defined by the features of the independent claims. Some specific embodiments are defined in the dependent claims.

According to a first aspect of the present invention, there is provided a wrist-wearable apparatus comprising a processing core, at least one memory including computer program code, the at least one memory and the computer program code being configured to, with the at least one processing core, cause the apparatus at least to: receive data streams from at least one optical sensor and at least one IMU, wherein the sensors are configured to measure a user, provide the received data streams to a gesture classifier, and determine, using the gesture classifier gesture state by detecting and classifying gesture transitions based on transients within the sensor data of the received data streams, the gesture classifier comprising a neural network classifier trained to detect said gesture transitions, wherein the data streams may optionally be preprocessed before being provided to the gesture classifier.

According to a second aspect of the present invention, there is provided a method for identifying a selection gesture from obtained data, the method comprising: receiving data streams from at least one optical sensor and at least one IMU, wherein the sensors are configured to measure a user, providing the received data streams to a gesture classifier, and determining, using the gesture classifier, gesture state by detecting and classifying gesture transitions based on transients within the sensor data of the received data streams, the gesture classifier comprising a neural network classifier trained to detect said gesture transitions, wherein the data streams may optionally be preprocessed before being provided to the gesture classifier.

According to a third aspect of the present invention, there is provided a computer program when executed by at least one processor, cause an apparatus to at least: receive data streams from at least one optical sensor and at least one IMU, wherein the sensors are configured to measure a user, provide the received data streams to a gesture classifier, and determine, using the gesture classifier, gesture state by detecting and classifying gesture transitions based on transients within the sensor data of the received data streams, the gesture classifier comprising a neural network classifier trained to detect said gesture transitions, wherein the data streams may optionally be preprocessed before being provided to the gesture classifier.

According to a fourth aspect of the present invention, there is provided a non-transitory computer readable medium having stored thereon a set of computer readable instructions, that when executed on a processor cause the second aspect to be performed or an apparatus comprising the processor to be configured in accordance with the first aspect.

### BRIEF DESCRIPTION OF THE DRAWINGS

FIGURES 1A and 1B illustrate schematic views of an example apparatus 100 capable of supporting at least some of the embodiments of the present invention;
FIGURE 2 illustrates exemplary sensor data which corresponds to a user action;
FIGURE 3 illustrates exemplary measurement areas for an apparatus capable of supporting at least some of the embodiments of the present invention;
FIGURE 4 illustrates exemplary user interface interactables for an apparatus capable of supporting at least some of the embodiments of the present invention;
FIGURE 5 illustrates in flowchart form an exemplary process capable of supporting at least some embodiments of the present invention;
FIGURE 6 illustrates apparatus capable of supporting at least some embodiments of the present invention; and
FIGURE 7 illustrates an apparatus capable of supporting at least some embodiments of the present invention.

### EMBODIMENTS

A multimodal biometric measurement apparatus and a corresponding method are described herein. Multimodal biometric measurement is to be understood as obtaining, processing and/or analyzing a plurality of biometrically relevant measurement information, in other words, measurements related to a user's body and actions thereof, achieved using a plurality of modes, such as sensors. The apparatus and/or method may be used for at least one of the following, for example: measurement, sensing, signal acquisition, analysis, user interface tasks. Such an apparatus is preferably suitable for a user to wear. The user may control one or more devices using said apparatus. The control may be in the form of a user interface, UI, or a human-machine interface, HMI. The apparatus may comprise one or more sensors. The apparatus may be configured to generate user interface data based on data from said one or more sensors. The user interface data may be used at least in part to allow the user to control the apparatus or at least one second apparatus. The second apparatus may be, for example, at least one of: a personal computer, PC, a server, a mobile phone, a smartphone, a tablet device, a smart watch, or any type of suitable electronic device. A controlled or controllable apparatus may perform at least one of: an application, a game, and/or an operating system, any of which may be controlled by the multimodal apparatus.

When interacting with AR/VR/MR/XR applications, for example when using devices such as smartwatches or extended reality headsets, users need to be able to perform a variety of actions (also known as user actions), such as selecting, dragging and dropping, rotating and dropping, using sliders, and zooming. The present embodiments provide improvements in detecting user actions, which may lead to improved responsiveness when implemented in or by a controller or a system.

Statefulness is a well known term in the computing and user interface domains. In essence, it means that user inputs and outputs have a state or value that is maintained in system memory. Instead of only monitoring transitions the past actions or events affect the system so that current or future actions are given different context and/or responses. Statefulness is a critical aspect of human-computer interaction devices because it enables richer interactions compared to momentary inputs. Interactions such as drag and drop, pinch to zoom require statefulness.

A user may perform at least one user action. Typically, the user will perform an action to affect the controllable apparatus and/or the AR/VR/MR/XR application. A user action may comprise, for example, at least one of: a movement, a gesture, an interaction with an object, an interaction with a body part of the user, a null action. An example user action is the "pinch" gesture, where the user touches the tip of the index finger with the tip of the thumb. Another example is a "thumbs up" gesture, where the user extends his thumb, curls his fingers and rotates his hand so that the thumb is pointing upwards. The embodiments are configured to identify (determine) at least one user action by determining a gesture state, based at least in part on sensor input. Reliable identification of user actions enables action-based control, for example using the embodiments disclosed herein.

A user action may comprise at least one state transition. For example, a user action could be to pinch, that is to say to transition from an unpinch state to a pinch state. In the embodiments, a gesture transition, in other words a transition between states, action is determined, for example by a neural network, based at least in part on sensor data.

In at least some of the embodiments, a user interface, UI, command is generated, by an apparatus such as apparatus 100,based on the determined gesture state. The UI command may be termed, for example, a human-machine interface, HMI, command, a user interface interaction, and/or an HMI interaction. Such a command is usable to communicate user interface actions. For example, a user interface action may correspond to an "enter" key on a personal computer. In at least some embodiments, an output generator, for example a user interface command generator, is used to map the user action to the predetermined user interface action, and/or to generate a user interface command based on the predetermined user interface action. Thus, the controlled device need not understand the user action, only the UI command, which may be provided in a standard format such as human interface device, HID, report descriptors. The UI command may comprise, for example, a data packet and/or frame comprising a UI instruction.

In at least some of the embodiments, the apparatus comprises a mounting component configured to be worn by a user. The mounting component is thus a wearable component. Such a component may be any of the following: a strap, a band, a wristband, a bracelet, a glove. The mounting component may be attached to and/or formed by another apparatus such as a smartwatch, or form part of a larger apparatus such as a gauntlet. In some embodiments, a strap, a band, and/or a wristband has a width of 2 to 5 cm, preferably 3 to 4 cm, more preferably 3 cm.

In the embodiments, signals are measured by at least one sensor. Said sensor may comprise or be connected to a processor and memory, where the processor may be configured so that the measuring is performed. Measuring may be termed sensing or detecting. Measuring comprises, for example, detecting changes in at least one of: the user, the environment, the physical world. Measuring may further comprise, for example, applying at least one timestamp to sensed data, transmitting said sensed data (with or without the at least one timestamp).

Signal data may comprise one or more transients. A transient may be any change in a signal. In particular, a transient may comprise any of: a rising edge in a signal, a falling edge in a signal.

At least some embodiments are configured to measure characteristics, for example a gesture, a position and/or a movement of the user by using an inertial measurement unit, IMU. The IMU may be configured to provide position information of the apparatus. The IMU may be termed an inertial measurement unit sensor. The IMU may comprise at least one of the following: a multi-axial accelerometer, a multi-axial gyroscope, a multi-axial magnetometer, an altimeter, a barometer. It is preferable that the IMU comprises a magnetometer as the magnetometer provides an absolute reference for the IMU. A barometer, which is usable as an altimeter, may provide additional degrees of freedom to the IMU. The IMU signal data may comprise transients.

At least some embodiments are configured to measure characteristics, for example a gesture, a position and/or a movement of the user by using an optical sensor. An optical sensor may comprise, for example, a photoplethysmography (PPG) sensor. An optical sensor, for example a PPG sensor may be termed a biometric sensor and may measure, for example, at least one of the following: heart rate, oxygen saturation levels or other biometric data. Light emitting diodes (LED) are typically used to illuminate the underlying tissue, and the brightness variations that occur during cardiac cycles are measured. An optical sensor may use both visible and infrared light to perform these functions. The optical signal data may comprise transients.

For use in gesture classification, motion artifacts in the optical sensor data may be minimized, whereby more accurate readings are obtained. Minimization may be done using low-pass or a median filter for fast motion artifacts, and by using a highpass filter for slow motion artifacts, for example. The optical sensor data can be used for other purposes besides measuring heart rate and oxygen saturation levels. For example, a PPG sensor may be used to measure the amount of reflected light. The amount of reflected light is influenced by the proximity of the sensor to the user's skin as well as reflectance of the underlying tissue. Proximity is affected by tendon movement, for example.

At least some embodiments are configured to measure vibration signals and/or acoustic signals. Such signals may be measured, for example, from a user, in particular the wrist area of the user. A bioacoustics sensor may be configured to measure vibrations such as the interior waves within the user and/or surface waves on the skin of the user. Such vibrations may result from, for example, touch events. A touch event may comprise the user touching an object and/or the user touching himself and/or another user. The bioacoustics sensor may comprise a contact microphone sensor (a piezo contact microphone), a MEMS (micro-electro mechanical systems) microphone, and/or a vibration sensor, such as an accelerometer detecting accelerations produced by acoustically vibrating structures (e.g. the user or the mounting component).

Sensors, such as the inertial measurement unit sensor, the bioacoustics sensor, and/or the optical sensor, may be configured to provide a sensor data stream. The providing may be within the apparatus, for example to a controller, a digital signal processor, DSP, a memory. Alternatively or additionally, the providing may be to an external apparatus. A sensor data stream may comprise one or more raw signals measured by sensors. Additionally, a sensor data stream may comprise at least one of: synchronization data, configuration data, and/or identification data. Such data may be used by the controller to compare data from different sensors, for example.

In at least some of the embodiments, the apparatus comprises a means for providing kinesthetic feedback and/or tactile feedback. Such feedback may comprise, for example, vibration, and may be known as "haptic feedback". The means for providing haptic feedback may comprise, for example, at least one of the following: an actuator, a motor, a haptic output device. A preferred actuator, usable in all embodiments, is a linear resonance actuator, LRA. Haptic feedback may be useful to provide a user with feedback from the user interface which improves the usability of the user interface. Further, haptic feedback may alert the user to events or contextual changes in the user interface.

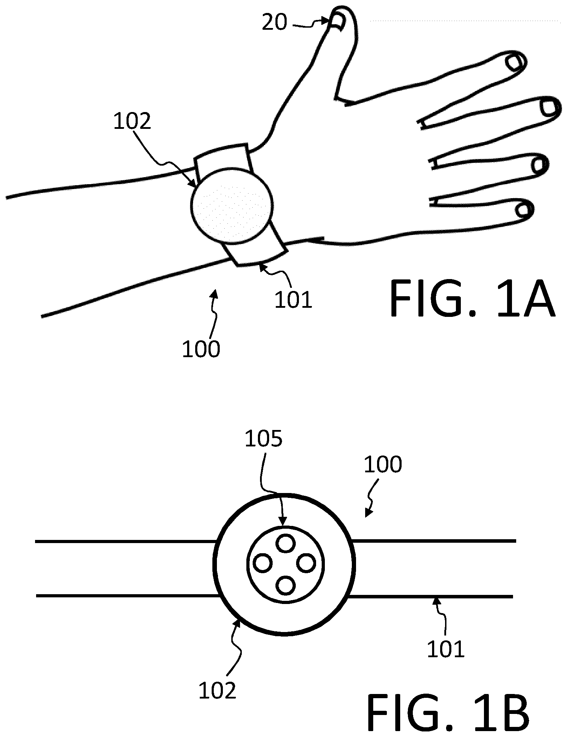

FIGURES 1A and 1B show an apparatus 100 in accordance with at least some embodiments of the present invention. The apparatus 100 may be suitable for sensing user motions and/or actions and acting as a user interface device and/or HMI device. The apparatus 100 may comprise at least one optical sensor, which may be arranged to face the user's hand. The apparatus 100 may comprise at least one inertial measurement unit 104 within the housing 102. The sensor data is acquired with an onboard controller. The sensor data may be preprocessed by the controller. The controller may be configured to detect gesture states and consequently user actions, for example whether the hand is in a pinch state or not, using, for example, a classifier or a classifier algorithm, such as a neural network classifier.

In at least some embodiments, apparatus 100 may comprise a smartwatch. Preferably, apparatus 100 comprises a screen. Said screen may be used to provide gesture state information to a user. In at least some embodiments, apparatus 100 may comprise at least one of the following components, for example: a haptic device, a screen, a touchscreen, a speaker, a heart rate sensor (for example, an optical sensor), a Bluetooth communications device.

The apparatus 100 comprises a mounting component 101, which in the Figure 1A is presented in the form of a strap. The apparatus comprises housing 102 attached to mounting component 101. User 20 may wear the apparatus 100, for example on a wrist so that the sensor 104 is facing the user's wrist area, specifically the skin of the wrist area.

The apparatus 100 further comprises a controller 103 within housing 102. Controller 103 comprises at least one processor and at least one memory and communications interface, wherein the memory may comprise instructions that, when executed by the processor, allow communication with other apparatuses such as a head device and/or a computing device via the communications interface. The controller may be configured so as to cause the controller at least to receive concurrent sensor data streams from the sensors 104 and 105. The controller may be configured to perform preprocessing on at least one of the sensor data streams, wherein the preprocessing may comprise, for example, at least one of: data cleansing, feature transformation, feature engineering, and feature selection. The controller may be configured to process the received sensor data streams from the sensors. The controller may be configured to generate, based on the characteristics of the of the processed sensor data stream, at least one user interface, UI, event and/or command. Further, the controller may comprise models, which may comprise at least one neural network.

The apparatus 100 further comprises an inertial measurement unit, IMU, 104. The IMU 104 may be within the housing 102. The IMU 104 is configured to provide a sensor data stream, for example to the controller. Said sensor data stream comprises, for example, at least one of the following: multi-axial accelerometer data, gyroscope data, and/or magnetometer data. These three types of data represent accelerations, angular velocity, and magnetic flux density, respectively. One or more of the components of the apparatus 100 may be combined, for example the IMU 104 and the processor of the controller may be located on the same PCB (printed circuit board). Changes in the IMU data reflect, for example, movements and/or actions by the user, and thus such movements and/or actions may be detected by using the IMU data.

In at least some embodiments the inertial measurement unit, IMU, 104, or a sensor, such as a gyroscope, or a plurality of sensors housed in a single device or in a plurality of devices are placed and/or fastened on an arm of a user. Fastening may be done using, for example, the mounting component 101.

FIGURE 1B shows the inner side of the apparatus 100, configured to be worn against the user's skin, for example on the wrist. Optical sensor 105 is shown on one surface of housing 102. Optical sensor 105 may comprise a PPG sensor. Optical sensor 105 may comprise at least one LED. Optical sensor 105 is configured to provide a sensor data stream, for example to the controller. Said sensor data stream comprises, for example, at least one of the following: heart rate data, analog to digital (ADC) data which corresponds to the amount of reflected light. One or more of the components of the apparatus 100 may be combined, for example the optical sensor 105 and the processor of the controller may be connected to the same PCB. Changes in the optical sensor data reflect, for example, movements and/or actions by the user, and thus such movements and/or actions may be detected by using the optical sensor data.

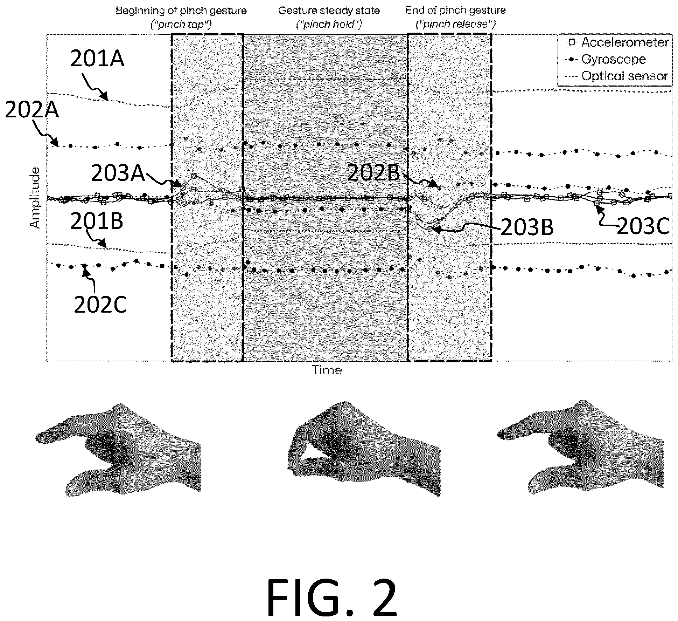

FIGURE 2 illustrates exemplary sensor data which corresponds to a user action. In the lower portion of the figure, a sequence of states of a user's hand are shown. First, the user's hand is in a non-pinch state (also known as an unpinched state). Then, the user forms a pinch with his thumb and forefinger. These two digits are commonly used in pinching, but others may be used as well. Finally, the user releases the pinch and the hand is again in a non-pinched state.

The upper portion of the figure shows the corresponding sensor data which may be measured, for example using apparatus 100, when the user performs the sequence of hand poses corresponding to the gesture interface states. The transition from the unpinched state into the pinched state and the transition from the pinched state into the unpinched state are marked within the figure. Such transitions may be termed gesture transitions. Several transients occur within the gesture transitions, as can be seen in the figure where the signals change within the transitions.

A data stream may comprise one or more signals. In the figure, signals 201A and 201B correspond to received sensor data measured by an optical sensor. The optical sensor may provide signals corresponding to sensed visible light data, sensed infrared light data. Of these, infrared data is preferred. Signals 202A, 202B and 202C correspond to received signals from a gyroscope, which may be part of the IMU. The gyroscope is three-axis and therefore three signals are received from it. Signals 203A and 203B correspond to received signals from an accelerometer, which may be part of the IMU. The accelerometer is three-axis and therefore three signals are received from it. Said sensors may measure data related to the user's hand, for example the user's wrist area. The shown sensor signals relate to the user's hand positions shown in the lower part of figure 2.

In the exemplary situation within Figure 2, the user and the apparatus are initially in "unpinched state". When a transition which matches a prelearned definition of a unpinch-pinch transition is detected, the apparatus 100 goes into "pinch state". While pinching and unpinching are the reverse actions of each other in gesture domain, the signal patterns associated with each of these gestures are dissimilar and asymmetric. For example, a pinch (tap) is marked by a clear vibromechanical pattern of the wearable whereas unpinch is less pronounced in the vibromechanical domain. Both pinch and unpinch are characterized by rising and falling edges in the optical domain but due to intrinsic properties of the optical sensing these edges are not distinct enough to be used for inference on their own. Thus, the combination of inertial sensors and optical sensors is required. Further, while the IMU data provides only transition information, the optical data may provide at least some stateful information along with transition information. A model in accordance with the present disclosure may be configured to utilize both types of information, for example via machine learning.

A relative value and/or threshold may be used to detect a transition instead of an absolute, as sensor data may have only minimal changes to the signal (i.e. `local peak and valley'). As such local peaks and valleys are not so distinct in the global signal, absolute values are not as useful as relative ones to detect transitions. Apparatus 100 may use the AC component of an incoming signal to do an adaptive offset removal. The adaptive offset removal allows detection of local rising and falling edges. Apparatus 100 is configured so that the sensitivity of unpinch transition detection is adjusted, for example when the apparatus is in pinch state. Sensitivity may mean adjusting a time window or a relative value. Sensitivity adjustment may also involve trajectory analysis of the hand. Commonly, hand motions in point and select tasks are characterized by a ballistic and corrective phase. A pinch or unpinch gesture is more likely to occur in a corrective phase as opposed to a ballistic phase. The state of the gesture (pinch or unpinch) may be either one in the ballistic phase. Therefore, the hysteresis information of state prior to trajectory phase can be incorporated in the adaptive sensitivity.

In embodiments, the optical sensor value is higher relative to the beginning and end of the gesture, as opposed to the gesture session mean. In other words, more importance may be placed on the beginning and end of the gesture so that the local peaks and valleys are detected.

As seen in the figure, when a pinch-unpinch state transition is detected, the apparatus enters unpinch state. Further, apparatus 100 may measure the transition time from unpinch state to pinch state for the individual user. The apparatus may disregard any transitions which occur quickly after the previous transition or which are illogical. For example, a user cannot transition from an unpinch state to a unpinch state. This may be taken into account by the gesture classifier and/or the interaction/state interpreter.

In embodiments, an adaptive time window is used as part of the gesture classification. The adaptive time window may be specifically tuned for typical gesture duration, for example based on training data. An adaptive time window may be, for example 1ms, with an adaptation range of 1-50%. Data used in the classifying and/or interpreting is stored in the controller of the apparatus. User-specific data which has been acquired, for example, in a single session, may be retained or discarded post-inference. Retaining has the benefit of further adapting to the user, whereas discarding saves memory resources.

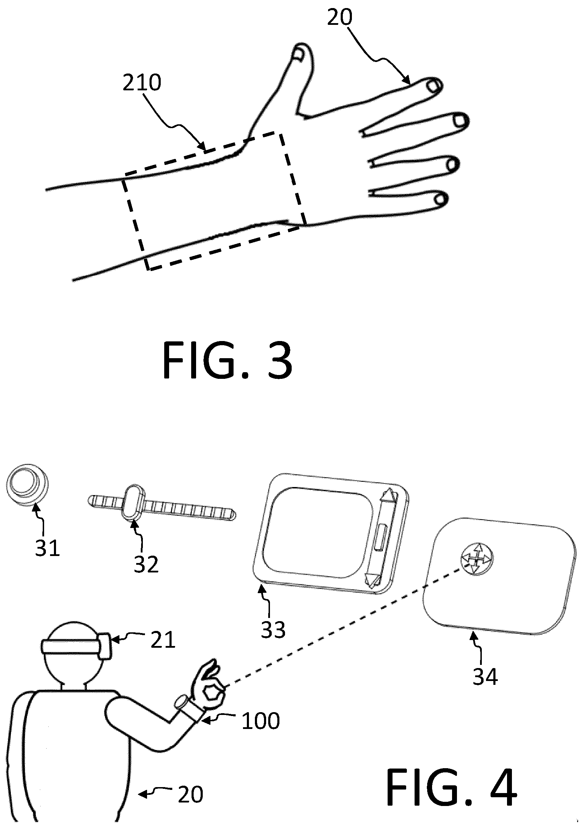

FIGURE 3 illustrates exemplary measurement areas of the apparatuses disclosed herein. In the figure, a measurement area 210 is shown in relation to the hand of a user 20. The sensors, such as sensors 104, 105 may measure signals from or at least related to the user within the area 210. The IMU may also be arranged within or near area 210. Preferably, the sensors and IMU are arranged to measure the user due to the housing 102 being attached to the mounting component 101 which is for example worn by the user.

FIGURE 4 illustrates exemplary user interface (UI) interactables. Such interactables are displayed to the user, for example as part of a VR, AR, MR or XR application, via head device 21. Head device 21 may comprise at least one of a head mounted device HMD, head set, virtual reality VR headset, extended reality XR headset, augmented reality AR headset, for example. Head device 21 may comprise a processor, memory and communications interface, wherein the memory may comprise instructions that, when executed by the processor, allow communication with other apparatuses such as apparatus 100 via the communications interface.

Apparatuses within this disclosure, for example apparatus 100, may be configured to communicate with at least one computing device. A computing device may comprise at least one of a computer, a server, a mobile device such a smartphone or tablet. Said device may be configured to at least participate, for example by calculation, in providing a VR/XR/AR experience to a user, for example by providing a scene for a HMD to display. A computing device may comprise a processor, memory and communications interface, wherein the memory may comprise instructions that, when executed by the processor, allow communication with other apparatuses such as apparatus 100 or a head device via the communications interface. The computing device may be head device 21 as discussed above.

Interactables 31, 32, 33, and 34 illustrate different types the user 20 may interact with the VR, AR or XR application (also known as a scene). The user interaction is detected by apparatus 100 and the scene displayed to user 20 via device 21 is updated accordingly, for example by a computer or mobile device connected to apparatus 100 and device 21.

Interactable 31 is a button interactable, wherein the user can press the button to perform an action. Much like a physical button, the button requires movement in one axis. Interactable 32 is a slidable interactable, wherein the user can move the slider along the provided axis, for example to adjust a value. Interactable 33 is a scrollable interactable, wherein the user can move a slider and/or the screen along at least one axis, for example to move a view, or to scroll through content. Interactable 34 is a pan interactable, wherein the user can move a slider or the view along the provided axes to move a view. Further types of interactable include "grabbable", i.e. something that can be grabbed by the user's hand. An interactable is not limited to a single type, for example a slider is grabbable.

The XR application is configured to provide an indication of the interactables, for example to the apparatus 100. The indication may comprise at least one of the following attributes of an interactable: position, type, size, orientation, state. Apparatus 100 may be configured to receive the indication and adjust internal processing accordingly, for example via affordances.

In the domain of user interfaces, affordances are sensory cues (commonly visual) that inform the user on how a particular element is interacted with. These cues include geometry, symbols (e.g. arrows) etc. Common affordances include scrollbars that are scrollable and buttons that are pushable. A affordance profile may be used, for example by a interaction interpreter, to increase the accuracy of detecting an action, when the application can predict what kind of action the user is likely to perform next. For example, a pinch is usually followed by an unpinch sooner or later. An affordance profile may comprise an expected user action for an interactable, for example. Prediction may be performed, for example, by a neural network executed by a controller of an apparatus.

In embodiments, apparatus 100 may be configured to obtain or receive data from the at least one optical sensor 105 and the at least one IMU 104, provide the obtained/received data to a gesture classifier, wherein the gesture classifier is configured to determine whether the hand is in a gesture state, for example a pinch state, or not in a gesture state. The determination may be performed by detecting and classifying gesture transitions based on transients within the obtained/received data. Apparatus 100 may be configured to perform preprocessing on one or more data, for example one or more data stream, before providing said data to the classifier. Apparatus 100 may be configured to perform the detection using a neural network trained to detect transitions between gesture states by detecting the rising and falling edges of the gesture.

The behavior (e.g. thresholding and rule-based temporal limits) of the gesture prediction may be modified according to the a priori known constraints of the interactable and scene logic. Such constraints may be provided to the apparatus, for example by a scene such as scene 351, and stored within apparatus 100. Constraints may be used as part of gesture detection, such as temporal limits whereby a counter-gesture can't happen during a predefined time, for example 50 milliseconds, after a previous gesture. Such corrections may be applied by an interaction and/or state interpreter configured to apply corrections based on application state and/or application context, based on the determined gesture state.

The apparatus may be configured to provide the transitions as events. In other words the apparatus may provide an event, for example "pinch on". The apparatus may be configured to return the user state as a `pollable'. In other words, the apparatus may be queried, for example `is pinch true or false', whereupon the state will be returned accordingly.

In some embodiments, gaze tracking information is available and usable in combination with the embodiments disclosed herein. Gaze tracking information, for example information 308, may comprise at least an indication where the user is looking. The information may comprise details, such as an identifier, with respect to an interactable that the user is looking at. Said information may be received, for example, from a headset such as an AR/MR/XR/VR headset. Apparatuses, such as apparatus 100, apparatus 300 and apparatus 700, may be configured to receive gaze tracking data, whereby the apparatus may use an affordance matching the interactable type in gesture detection.

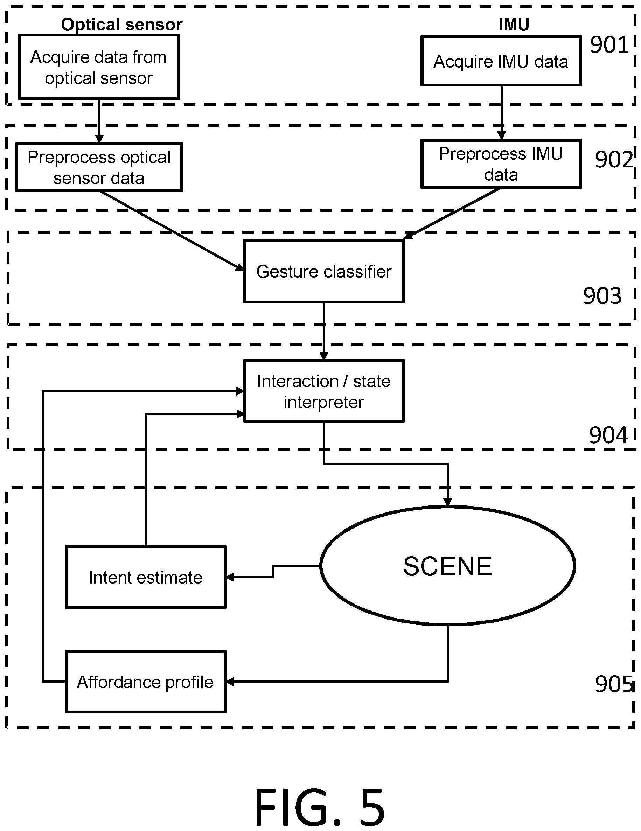

FIGURE 5 illustrates in flowchart form an exemplary process capable of supporting at least some embodiments of the present invention. The process may be performed wholly or in part by any of apparatuses 100, 300, 700. At the top of Fig. 5, the optical sensor (similar to sensor 105, for example), and the IMU (similar to 104, for example) are shown. The actions and steps of the flowchart may be performed in least in part by an apparatus, for example an apparatus disclosed herein such as apparatus 100. At least some actions, such as providing a scene, may be performed by a second apparatus, such as a head device 21, for example. At least some actions, such as providing communication, may be performed by a third apparatus, such as a mobile device comprising at least one processor, for example.

The flowchart of Figure 5 comprises illustrative but non-limiting steps 901, 902, 903, 904, and 905. Actions need not necessarily be within a step. Further, the actions within steps 901, 902, 903, 904 and 905 need not be performed concurrently.

Step 901 comprises data acquisition. In this step the controller, for example the controller 103, receives data streams from one or both of the IMU 104 and the optical sensor 105.

As seen in the flowchart, after samples (sensor data) are acquired, the acquired sensor data is preprocessed. Step 902 comprises preprocessing. Regarding the IMU, the IMU may be adjusted before or after the preprocessing. Such adjustment may be self-referential, e.g. the sensor is adjusted or calibrated according to a stored reference value or a known good (e.g. magnetic north for the IMU).

As seen in the flowchart, after the preprocessing, the preprocessed data is input into the gesture classifier in step 903. In the flowchart, the preprocessed IMU data may be used to calculate the orientation IMU (and thereby the orientation of the user's hand) directly, for example without a neural network.

Further in step 903, the model outputs the inference output corresponding to a gesture state and consequently a user action. The output, in other words the inferred gesture state, may be provided as a confidence value, for example.

In step 904, the inferred gesture state is provided to an interaction and/or state interpreter. Said interpreter determines the user input, which is then provided to the scene (application) being controlled, for example in a format such as a boolean value and/or a HID, human interface device, frame. Said application may be run in another apparatus or networked device.

Optional contextual information reflecting the application state (scene state) may be provided as well to the interpreter. Depending on this contextual information, the interpreter may use an affordance profile in interpreting the received user action. For example, if the contextual information indicates that the user is interacting with a pan interactable 34, the interpreter may expect a pinch action to be performed and consequently lower the required threshold for a pinch action.

In step 905, the scene receives the interaction data. The scene is updated accordingly. The interpreter may be configured to provide the interaction data as an event and/or as a pollable, whereby the scene may query the event state. The scene may provide intent estimate data. A intent estimate may comprise an indication of future actions, and/or information related to a set of suitable actions with respect to contextual information. For example, the scene may provide information related to a previous action (for example "playing a video") and an expected future action (for example "pausing a video", "adjusting volume"). The scene may provide an affordance profile to the interpreter. As discussed above, this allows to increase the accuracy in detecting user actions, when the apparatus and/or the scene is able to predict the next action.

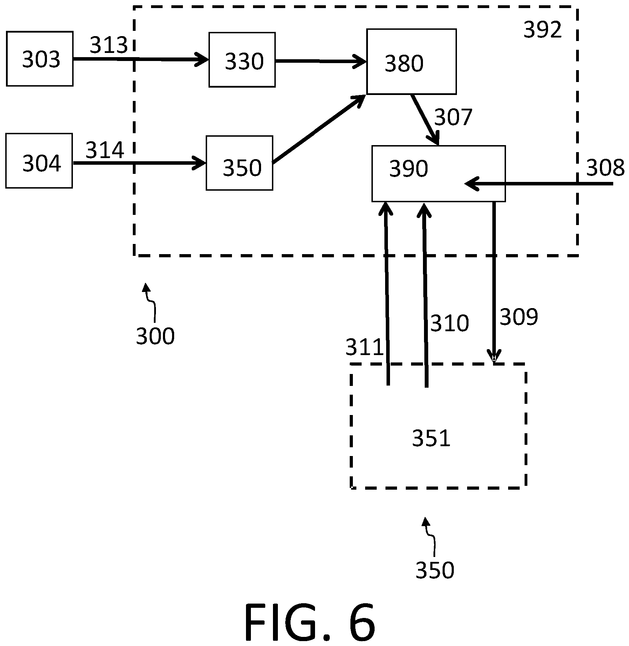

FIGURE 6 illustrates apparatus 300 capable of supporting at least some embodiments of the present invention. Said apparatus is identical to apparatus 100, except when stated otherwise.

In Figure 6, an exemplary schematic view of apparatus 300 is shown. Apparatus 300 comprises the IMU 304, the optical sensor 305, and controller 392. Apparatus 300 may be similar to apparatus 100 in that it may comprise a mounting component so that it can be worn by a user. Controller 392 is shown in the figure represented by the dotted line. As shown in the figure, controller 392 may comprise, for example in the memory of the controller, at least the model 380. Controller 392 may preferably comprise interaction/state interpreter 390.

Sensors 305 and 304 are each configured to transmit sensor data streams, for example the sensor data streams 313 and 314, respectively. Said sensor data streams may comprise a plurality of channels as discussed herein with respect to signals 201, 202 and 203. The sensor data streams may be received by the controller 392. Further sensor data streams, for example bioacoustic sensor data streams, may also be received by controller 392.

Within the controller 392, the received sensor data streams are preprocessed in blocks 330 and 350. Preprocessed data streams may be directed to at least one model 380. Model 380 may be a gesture classifier, such as a neural network gesture classifier.

A model, such as model 380, may comprise a neural network. The neural network may be, for example, a feed-forward neural network, a convolution neural network, or a recurrent neural network, or a graph neural network. A neural network may comprise a classifier and/or regression. The neural network may apply a supervised learning algorithm. In supervised learning, a sample of inputs with known outputs is used from which the network learns to generalize. Alternatively, the model may be constructed using an unsupervised learning or a reinforcement learning algorithm. In some embodiments, the neural network has been trained so that certain signal characteristics correspond to certain gesture transition. For example, a neural network may be trained to associate a certain signal, a change in a signal or a change in a plurality of signals with a gesture transition, for example a pinch or unpinch action, as exemplified by Figure 2. A neural network may be trained to provide a confidence level for an outputted user action.

A model may comprise at least one of: algorithms, heuristics, and/or mathematical models. A sensor fusion approach may be employed to reduce the influence of intrinsic unideal behavior of particular sensors, such as drift or noise. Sensor fusion may involve use of a complimentary filter, Kalman filter or Mahony & Madgwick orientation filter. Such a model may additionally comprise a neural network as disclosed herein.

A model may comprise, for example, at least one convolutional neural network, CNN, performing inference on the input data, for example the signals received from the sensors and/or preprocessed data. Convolutions may be performed in spatial or temporal dimensions. Features (computed from the sensor data fed to the CNN) may be chosen algorithmically or manually. A model may comprise a further RNN (recurrent neural network), which may be used in conjunction with a neural network to support user action characteristic identification based on sensor data which reflects user activity.

In accordance with this disclosure, the training of a model may be performed, for example, using a labelled data set containing multimodal biometric data from multiple subjects. This data set may be augmented and expanded using synthesized data. Depending on the employed model construction technique, the sequence of computational operations that compose the model may be derived via backpropagation, Markov-Decision processes, Monte Carlo methods, or other statistical methods. The model construction may involve dimensionality reduction and clustering techniques.

The above-mentioned model 380 is each configured to output a confidence level of a user action based on the received sensor data stream. The confidence level may comprise one or more indicated probabilities in the form of percentage values associated with one or more respective user actions. The confidence level may comprise an output layer of a neural network. The confidence level may be expressed in vector form. Such a vector may comprise a 1 x n vector, populated with the probability values of each user action known to the controller. For example, model 380, which receives the sensor data streams, may receive a data stream comprising a signal which model 380 interprets as a "pinch" gesture transition (the user has pinched) with a confidence level of 90%.

At least one determined gesture state and/or gesture transition, or confidence levels associated with said determined state and/or transition, is outputted by the gesture classifier 380 and received by the interaction/state interpreter 390. The interaction/state interpreter 390 is configured to determine, based at least in part on the received at least one gesture state and/or transition, user input which corresponds to the received at least one determined one gesture state and/or transition, and/or associated confidence level. For example, the model indicates that a "pinch" gesture transition has occurred with a high probability, the interaction/state interpreter may conclude that an "pinch" user input has taken place.

The interaction/state interpreter 390 may comprise a list and/or set of user actions, gesture states and respective confidence levels. For example, a user input corresponding to a one gesture state and/or transition is determined when a confidence value matching at least the required threshold level has been received from the gesture classifier. Further, apparatus may be configured to adjust the threshold levels, for example based on received affordance profile 311 and/or intent 310.

The interaction/state interpreter 390 may receive optional gaze tracking information 308. Gaze tracking information may comprise at least an indication where the user is looking. The information may comprise details, such as an identifier, with respect to an interactable that the user is looking at. Said information may be received, for example, from a headset such as an AR/MR/XR/VR headset. Said information may be received as a data stream, which may comprise coordinates.

In the event of a conflict, for example the user action with the highest indicated probability may be selected by the interaction/state interpreter (ArgMax function). The interaction/state interpreter 390 may comprise, for example, at least one of the following: a rule-based system, an inference engine, a knowledge base, a lookup table, a prediction algorithm, a decision tree, a heuristic. For example, the interaction/state interpreter may comprise an inference engine and a knowledge base. The inference engine outputs probability sets. These sets are handled by the interaction/state interpreter which may comprise IF-THEN statements.

Intent data 310 may comprise the application state, context, and/or the game state of an application and/or a device being interacted with. The application state corresponds to the status of an application running on a controllable apparatus, and may comprise, for example, at least one of: variables, static variables, objects, registers, open file descriptors, open network sockets, and/or kernel buffers.

Said data may be used by the interaction/state interpreter to adjust the threshold level of a user action. For example, if an application prompts the user to "pinch" to confirm, the corresponding "pinch" threshold may be lowered so that a pinch action will be detected even if the models output a lower confidence level of such an action occurring.

An example of the operation of the apparatus 300 is as follows: A user is wearing apparatus 300 on his hand. Said user performs an action, the action comprising: pressing his index finger to his thumb. The sensors of apparatus 300 provide data during the action as follows:
- The IMU sensor 304 provides a data stream 314 reflecting the orientation of the IMU (and thereby the apparatus 300) and acceleration data.
- The optical sensor 305 provides a data stream 313 comprising, for example, data from a PPG sensor configured to measure the amount of reflected light from a user's skin, which corresponds to the movements of the user's tendons and/or muscles within the wrist region.

The data streams 314 and 313 are received by model 380. Data streams 314 and 313 may correspond to signals 201, 202 and 203. In model 380, the IMU sensor data and the optical sensor data are used by the model, and a gesture transition from unpinch to pinch is detected by the model. Based on the detected gesture transition, a gesture state of "pinch" with a confidence level of 68% is provided to interaction/state interpreter 390.

Event interpreter 390 therefore receives the gesture state "pinch" and the associated confidence level. The interaction/state interpreter determines that the thresholds for the user action have been met, optionally referring to received affordance profile 311 and intent data 310, for example by adjusting a threshold based on at least one of 311 and/or 310, in the process. Further, interpreter 390 may receive optional gaze tracking information 308. Thus, interaction/state interpreter 390, then, agrees on a state of "pinch".

The state 309 is then transmitted to an application, for example a scene such as scene 351, executed by an apparatus 360, which may be, for example, a personal computer or a HMD. In this example, the apparatus 360 receives a state of pinch, instead of any sensor data, thereby conserving resources of apparatus 360.

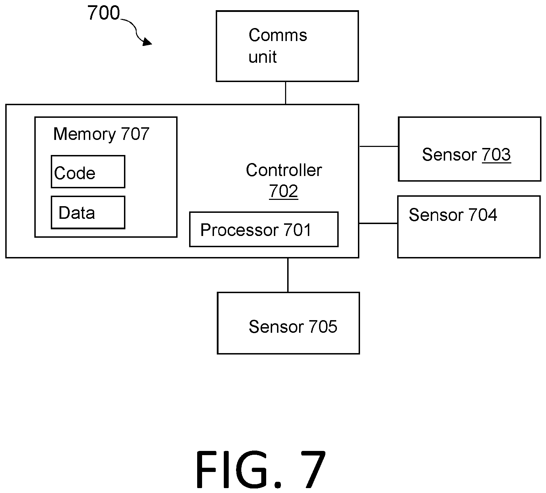

FIGURE 7 illustrates an apparatus 700 capable of supporting at least some of the embodiments of the invention.

The apparatus 700 comprises a controller 702. The controller comprises at least one processor, and at least one memory including computer program code, and optionally data. The apparatus 700 may further comprise a communication unit or interface. Such a unit may comprise, for example, a wireless and/or wired transceiver. The apparatus 700 may further comprise sensors such as sensor 703, 704, which are operatively connected to the controller. Said sensors may comprise, for example, at least one of an IMU 703, an optical sensor 704. The apparatus 700 may also include other elements not shown in Fig. 7.

Although the apparatus 700 is depicted as including one processor, the apparatus 700 may include more processors. In an embodiment, the memory is capable of storing instructions, such as at least one of: operating system, various applications, models, neural networks and/or, preprocessing sequences. Furthermore, the memory may include a storage that may be used to store, e.g., at least some of the information and data used in the disclosed embodiments.

Furthermore, the processor is capable of executing the stored instructions. In an embodiment, the processor may be embodied as a multi-core processor, a single core processor, or a combination of one or more multi-core processors and one or more single core processors. For example, the processor may be embodied as one or more of various processing devices, such as a processing core, a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an embodiment, the processor may be configured to execute hard-coded functionality. In an embodiment, the processor is embodied as an executor of software instructions, wherein the instructions may specifically configure the processor to perform at least one of the models, sequences, algorithms and/or operations described herein when the instructions are executed.

The memory may be embodied as one or more volatile memory devices, one or more non-volatile memory devices, and/or a combination of one or more volatile memory devices and non-volatile memory devices. For example, the memory may be embodied as semiconductor memories (such as mask ROM, PROM (programmable ROM), EPROM (erasable PROM), flash ROM, RAM (random access memory), etc.).

The at least one memory and the computer program code may be configured to, with the at least one processor, cause the apparatus 700 to at least perform as follows: receive data streams from at least one optical sensor 105 and at least one IMU 104 wherein the sensors are configured to measure a user and/or wherein apparatus 700 comprises the sensors 104 and 105 and wherein apparatus 700 is configured to be worn by the user, provide the received data streams to a gesture classifier 380, and determine, using the gesture classifier 380, gesture state by detecting and classifying gesture transitions based on transients within the sensor data of the received data streams, the gesture classifier 380 comprising a neural network classifier trained to detect said gesture transitions, wherein the data streams may optionally be preprocessed before being provided to the gesture classifier. This has been discussed in more detail above with respect to figures 1 to 5.

Apparatus 700 may be configured to provide the determined gesture state to an interaction and/or state interpreter configured to apply corrections based on application state and/or context. The interaction/state interpreter may be provided by the controller of the apparatus 700.

Apparatus 700 may be configured to predict state transitions by detecting the statefulness of gesture based on the detected transitions, and to infer pinch state from the obtained data.

Apparatus 700 may be configured so that the interaction and/or state interpreter is configured to provide the detected gesture state to at least one of a XR/VR/MR/AR application, for example where the application is being executed on a computing device. The provided gesture state may be provided as an event. Alternatively or additionally, the provided gesture state may be provided as a pollable, whereby the apparatus may be queried for the event state. Apparatus 700 may be configured to receive, from the XR/VR/MR/AR application or a computing device, at least one of: an intent estimate or an affordance profile. Apparatus 700 may be configured so that an adaptive time window is used as part of the detecting, where the adaptive time window is specifically tuned for typical gesture duration, for example 1ms.

Apparatus 700 may be configured to receive, from the XR/VR/MR/AR application or a computing device, contextual information, for example corrections and/or context clues, and wherein the apparatus is configured to use the received contextual information to adjust statefulness detection. For example, contextual information may indicate a "drop zone" within the scene. When the user moves something to the drop zone, the drop may be initiated, for example by the interpreter, even if the confidence of a pinch-unpinch transition (a pinch-release) is not above the global threshold. Apparatus 700 may be configured to apply dead reckoning corrections and context cues to improve statefulness detection. Apparatus 700 may be configured to use a recurrent model to capture gesture history, for example user-specific gesture history, and thereby improve statefulness detection. Such capture may comprise information, for example, on previous user actions and/or previously interacted elements.

Apparatus 700 may be configured to transform discrete temporal events, such as taps and releases, into a state, such as pinched and unpinched, in order to detect transitions, such as index finger and thumb touch and release.

Apparatus 700 may be configured to perform on-board processing, the on-board processing comprising at least one of: the preprocessing, the gesture classification or the state interpretation.

Apparatus 700 may be configured to perform a method for identifying a selection gesture from obtained data, the method comprising: obtaining (901) data from at least one optical sensor (105) and at least one IMU (104), providing (903) the data to a gesture classifier, wherein the gesture classifier is configured to detect whether the hand is in a gesture state, for example a pinch state, or not, wherein the data may be optionally preprocessed before it is provided to the classifier.

Said method may comprise using a neural network configured to detect transitions between gesture states by detecting the rising and falling edges of the gesture. Said method may comprise detecting transitions between pinched and unpinched states. Said method may comprise performing on-board processing of, for example, any of the preprocessing, gesture classifying, transition detecting steps.

The present disclosure can also be utilized via the following clauses:
Clause 1. A multimodal biometric measurement apparatus (100, 300, 700), the apparatus comprising: a controller comprising at least one processor and at least one memory including computer program code, the at least one memory and the computer program code configured to with the at least one processor, to cause the controller at least to receive (901) data streams from at least one optical sensor (105) and at least one IMU (104), wherein the sensors are configured to measure a user, provide (903) the received data streams to a gesture classifier (380), and determine, using the gesture classifier (380), gesture state by detecting and classifying gesture transitions based on transients within the sensor data of the received data streams, the gesture classifier (380) comprising a neural network classifier trained to detect said gesture transitions, wherein the data streams may optionally be preprocessed before being provided to the gesture classifier.
Clause 2. The apparatus of clause 1, further comprising a strap and a housing comprising the optical sensor and the IMU, where the optical sensor is arranged within the housing so that it may measure the wrist area of a user when worn by the user.
Clause 3. The apparatus of clause 1 or 2, wherein the apparatus comprises a smartwatch.
Clause 4. The apparatus of any of clauses 1 - 3, wherein the optical sensor comprises a PPG sensor.
Clause 5. The apparatus of any of clauses 1 - 4, wherein the controller is arranged within the housing.
Clause 6. A kit comprising at least one wrist-wearable apparatus (100), wherein said kit is configured to:
   - receive data streams from at least one optical sensor and at least one IMU, wherein the sensors are configured to measure a user,
   - provide the received data streams to a gesture classifier, and
   - determine, using the gesture classifier gesture state by detecting and classifying gesture transitions based on transients within the sensor data of the received data streams, the gesture classifier comprising a neural network classifier trained to detect said gesture transitions,
      wherein the data streams may optionally be preprocessed before being provided to the gesture classifier.
Clause 7. The kit of clause 6, where the kit comprises a head mounted device HMD comprising a display, said HMD being connected to apparatus (100) and configured to indicate, using the display, gesture state and/or gesture transitions.
Clause 8. The kit of clause 6 or 7, where the wrist-wearable apparatus comprises a display, said display being connected to controller (103) and configured to display, using the display, gesture state and/or gesture transitions.
Clause 9. The kit of clause 7, where the HMD is configured to provide contextual information to the wrist-wearable device, and/or where the HMD is configured to interpret and apply a confidence value of a gesture state provided by the wrist-wearable device.
Clause 10. The apparatus or kit of any preceding clause, wherein the wrist-wearable apparatus comprises a neural network classifier trained to detect gesture states based on sensor data.
Clause 11. A method for identifying a selection gesture from obtained data, the method comprising:
   - receiving (901) data streams from at least one optical sensor (105) and at least one IMU (104), wherein the sensors are configured to measure a user,
   - providing (903) the received data streams to a gesture classifier (380), and
   - determining, using the gesture classifier (380), gesture state by detecting and classifying gesture transitions based on transients within the sensor data of the received data streams, the gesture classifier (380) comprising a neural network classifier trained to detect said gesture transitions,
   wherein the data streams may optionally be preprocessed before being provided to the gesture classifier.
Clause 12. The method of clause 11, wherein the determined gesture state is provided to an interaction and/or state interpreter configured to apply corrections based on application state and/or context.
Clause 13. The method of any one of clauses 11 or 12, wherein the method further comprises detecting transitions between pinched and unpinched states.
Clause 14. The method of any one of clauses 11 to 13, wherein the method further comprises performing on-board processing of, for example, the preprocessing (902), gesture classifying (903), transition detecting steps.
Clause 15. The method of any one of clauses 11 to 14, wherein the method further comprises receiving, from a XR application, contextual information, for example corrections and/or context clues, and using the received contextual information to adjust statefulness detection.
Clause 16. A non-transitory computer readable medium having stored thereon a set of computer readable instructions that, when executed by at least one processor, cause an apparatus to at least:
   - receive data streams from at least one optical sensor (105) and at least one IMU (104), wherein the sensors are configured to measure a user,
   - provide the received data streams to a gesture classifier (380), and
   - determine, using the gesture classifier (380), gesture state by detecting and classifying gesture transitions based on transients within the sensor data of the received data streams, the gesture classifier (380) comprising a neural network classifier trained to detect said gesture transitions,
   wherein the data streams may optionally be preprocessed before being provided to the gesture classifier.

Advantages of the present disclosure include the following: Using IMU and optical sensor data, which is obtained from wearable sensors (for example wrist-worn sensors) overcomes common problems in VR/XR/AR interaction such as field-of-view or obstruction issues.

The embodiments disclosed provide a technical solution to a technical problem. One technical problem being solved is detection of pinch or tap gestures by an apparatus using onboard processing with IMU and optical sensor data. In practice, this is problematic because the data may contain different information related to the user's hand movements.

The embodiments herein overcome these limitations by using machine learning to detect gesture states based on transients within the sensor signals. In this manner, onboard gesture detection can be accomplished in a more accurate and robust fashion. This results in several advantages. First, the processing may be done near the sensor and therefore communication lag is minimized. Second, interpreter corrections based on e.g. application state may be done near the sensor as well. Third, using the selected sensors allows the user to discreetly provide UI commands, and the impact of hand position is minimal compared with e.g. camera-based systems. Other technical improvements may also flow from these embodiments, and other technical problems may be solved.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in providing a user interface, for example relating to XR, for a controllable apparatus, such as a personal computer or HMD.

**REFERENCE SIGNS LIST**

| | |
|---|---|
| 100, 300, 700, 360 | Apparatus |
| 101 | Mounting component |
| 102 | Housing |
| 103, 392, 702 | Controller |
| 104, 304, 703 | Inertial measurement unit (IMU) |
| 105, 305, 704 | Optical sensor |
| 210 | Wrist measurement area |
| 20 | User |
| 201A-B, 202A-C, 203A-B | Sensor signals |
| 308 | Gaze tracking information |
| 309 | State information |
| 310 | Intent data |
| 311 | Affordance profile |
| 313, 314 | Sensor data stream |
| 330, 350 | Preprocessing blocks |
| 351 | Scene |
| 380 | Model |
| 390 | Interpreter |
| 901, 902, 903, 904, 905 | Steps of method |

## Claims

1. A wrist-wearable apparatus (100) comprising a processing core (701), at least one memory (707) including computer program code, the at least one memory (707) and the computer program code being configured to, with the at least one processing core (701), cause the apparatus (100) at least to:
- receive data streams from at least one optical sensor (105) and at least one IMU (104), wherein the sensors are configured to measure a user,
- provide the received data streams to a gesture classifier (380), and
- determine, using the gesture classifier (380), gesture state by detecting and classifying gesture transitions based on transients within the sensor data of the received data streams, the gesture classifier (380) comprising a neural network classifier trained to detect said gesture transitions,
wherein the data streams may optionally be preprocessed before being provided to the gesture classifier.

2. The apparatus of claim 1, wherein the apparatus is further configured to provide the determined gesture state to an interaction and/or state interpreter configured to apply corrections based on application state and/or context.

3. The apparatus of any one of the preceding claims, wherein the apparatus is further configured to infer pinch state from the received data streams based on the determined gesture state.

4. The apparatus of any one of the preceding claims, wherein the apparatus is further configured so that the interaction and/or state interpreter is configured to provide the determined gesture state, to an extended reality, XR, application.

5. The apparatus of any one of the preceding claims, wherein the apparatus is further configured to receive, from a XR application, at least one of: an intent estimate or an affordance profile.

6. The apparatus of any one of the preceding claims, wherein the apparatus is further configured so that an adaptive time window is used as part of the detecting, where the adaptive time window is specifically tuned for typical gesture duration, for example 1ms.

7. The apparatus of any one of the preceding claims, wherein the apparatus is further configured to receive, from the XR application, contextual information, for example corrections and/or context clues, and wherein the apparatus is configured to use the received contextual information to adjust statefulness detection.

8. The apparatus of any one of the preceding claims, wherein the apparatus is further configured to receive gaze tracking information, for example information regarding the position of the user's gaze and nearby interactables, wherein the apparatus is configured to use the received gaze tracking information to adjust statefulness detection.

9. The apparatus of any one of the preceding claims, wherein the apparatus is further configured to apply dead reckoning corrections and context cues to improve statefulness detection.

10. The apparatus of any one of the preceding claims, wherein the apparatus is further configured to use a recurrent model to capture gesture history and improve statefulness detection.

11. The apparatus of any one of the preceding claims, wherein the apparatus is further configured so that the optical sensor value is higher relative to the beginning and end of the gesture, as opposed to the gesture session mean.

12. The apparatus of any one of the preceding claims, wherein the apparatus is further configured to transform discrete temporal events, such as taps and releases, into a state, such as pinched and unpinched, in order to detect transitions, such as index finger and thumb touch and release.

13. The apparatus of any one of the preceding claims, wherein the apparatus comprises the IMU (104) and the optical sensor (105).

14. The apparatus of claim 1, wherein the apparatus is further configured to perform on-board processing, the on-board processing comprising the preprocessing, the gesture classification and the state interpretation.

15. A method for identifying a selection gesture from obtained data, the method comprising:
- receiving (901) data streams from at least one optical sensor (105) and at least one IMU (104), wherein the sensors are configured to measure a user,
- providing (903) the received data streams to a gesture classifier (380), and
- determining, using the gesture classifier (380), gesture state by detecting and classifying gesture transitions based on transients within the sensor data of the received data streams, the gesture classifier (380) comprising a neural network classifier trained to detect said gesture transitions,
wherein the data streams may optionally be preprocessed before being provided to the gesture classifier.

16. The method of claim 15, wherein the method further comprises detecting transitions between pinched and unpinched states.

17. A non-transitory computer readable medium having stored thereon a set of computer readable instructions that, when executed by at least one processor, cause an apparatus to at least:
- receive data streams from at least one optical sensor (105) and at least one IMU (104), wherein the sensors are configured to measure a user,
- provide the received data streams to a gesture classifier (380), and
- determine, using the gesture classifier (380), gesture state by detecting and classifying gesture transitions based on transients within the sensor data of the received data streams, the gesture classifier (380) comprising a neural network classifier trained to detect said gesture transitions,
wherein the data streams may optionally be preprocessed before being provided to the gesture classifier.
